# EUROPÄISCHE PATENTSCHRIFT

(11) **EP 0 626 506 B1**
(45) Veröffentlichungstag und Bekanntmachung des Hinweises auf die Patenterteilung: **21.02.1996**
(21) Anmeldenummer: 93108615.1
(22) Anmeldetag: 27.05.1993
(51) Int. Cl.: F01N 7/00, F02D 41/14

(54) **Verfahren zur Überprüfung des Katalysatorwirkungsgrades**
Methode for monitoring catalyst efficiency
Procédé de surveillance de l'efficacité d'un catalysateur

(43) Veröffentlichungstag der Anmeldung: 30.11.1994
(73) Patentinhaber: SIEMENS AKTIENGESELLSCHAFT, D-80333 München (DE)
(72) Erfinder: Achleitner, Erwin, Dr. Dipl.-Ing., W-8400 Regensburg (DE)

(56) Entgegenhaltungen:
- EP-A- 0 536 789
- WO-A-93/02280
- WO-A-93/09335
- US-A- 5 134 847

## Beschreibung

Die Erfindung betrifft ein Verfahren zur Überprüfung des Wirkungsgrades eines Katalysators im Abgastrakt einer Brennkraftmaschine unter Verwendung einer Sauerstoffsonde vor dem Katalysator und einer Sauerstoffsonde nach dem Katalysator.

Bei Brennkraftmaschinen können die Schadstoffemissionen durch katalytische Nachbehandlung vermindert werden.
Die katalytische Nachbehandlung setzt eine bestimmte Zusammensetzung des Abgases voraus, ein sogenanntes stöchiometrisches Gemisch. Hierzu dient eine Gemischregelung mittels einer sogenannten Lambdasonde, durch die die Gemischzusammensetzung periodisch in engen Grenzen um den Sollwert reguliert wird. Diese Sonde gibt dazu bei fettem Kraftstoff-/Luftgemisch eine große Spannung (die Fettspannung) und bei magerem Kraftstoff-/Luftgemisch eine kleine Spannung (die Magerspannung) ab; dazwischen liegt ein Spannungssprung, der für λ = 1 charakteristisch ist.

Die Katalysatoren können im Laufe des Betriebes defekt werden, beispielsweise durch das Auftreten von Fehlzündungen oder durch die irrtümliche Verwendung von bleihaltigem Kraftstoff. Bei defektem Katalysator werden die Abgase gar nicht mehr oder nur noch zum Teil entgiftet.

Es ist deswegen notwendig, die Funktionsfähigkeit des Katalysators zu überwachen.
Es sind verschiedene Verfahren bekannt, die zur Katalysatorüberprüfung eine Sauerstoffsonde vor dem Katalysator und eine Sauerstoffsonde nach dem Katalysator verwenden.
Beispielsweise sind in den Dokumenten DE 23 04 622, DE 38 30 515 und DE 23 28 459 Verfahren beschrieben, die die Differenz der Ausgangssignale der beiden Sauerstoffsonden auswerten. In den Dokumenten DE 24 44 334, DE 38 41 685 und DE 41 01 616 wird der Zeitverzug zwischen den beiden Sonden für das Umschalten von Fett nach Mager oder umgekehrt als Maß für den Katalysatorwirkungsgrad herangezogen. In den Dokumenten EP 0 466 311 und EP 0 478 133 werden Überprüfungsverfahren angegeben, bei denen die Gemischzusammensetzung künstlich verändert wird und dann die Signalverläufe der beiden Sonden miteinander verglichen werden.

Aufgabe der vorliegenden Erfindung ist es ein weiteres Verfahren anzugeben, das es gestattet, die Funktionsfähigkeit beziehungsweise den Wirkungsgrad des Katalysators zuverlässig zu überprüfen.

Es werden dazu zwei Lambdasonden benutzt, nämlich eine vor dem Katalysator und eine hinter dem Katalysator.
Als Maß für den Wirkungsgrad des Katalysators wird die Größe seiner Sauerstoffspeicherfähigkeit verwendet.
Wenn der Katalysator einen guten Wirkungsgrad besitzt, werden die Lambdaschwankungen vor dem Katalysator, welche durch den Lambdaregler erzeugt werden, durch die Sauerstoffspeicherfähigkeit des Katalysators geglättet.

Besitzt der Katalysator infolge Alterung, Vergiftung durch verbleiten Kraftstoff oder durch Verbrennungsaussetzer nur noch einen geringen Wirkungsgrad, d.h. eine geringe Sauerstoffspeicherfähigkeit, so werden die Lambdaschwankungen vor dem Katalysator auch hinter dem Katalysator sichtbar. Die Lambdaschwankungen nach dem Katalysator werden mit einer Lambdasonde gemessen, welche den Sauerstoffgehalt im Abgas mißt.

Beim erfindungsgemäßen Verfahren werden für einen bestimmten Prüfzeitraum die Zeiten ermittelt, während denen die Lambdasonde vor dem Katalysator einen Fettwert anzeigt (Fettzeit vor KAT) und die Zeiten, während denen die Lambdasonde vor dem Katalysator einen Magerwert (Magerzeit vor KAT) anzeigt. Das gleiche wird für die Lambdasonde hinter dem KAT durchgeführt (Fettzeit bzw. Magerzeit hinter KAT).

Es werden dann die Verhältnisse gebildet: Fettzeit nach KAT/Fettzeit vor KAT und Magerzeit nach KAT/Magerzeit vor KAT.

Ist mindestens einer dieser Verhältniswerte annähernd Null, dann ist das Signal ausreichend geglättet worden, d.h. der Katalysator hat einen genügend großen Wirkungsgrad.

Der kleinere Wert der beiden Verhältniswerte wird gebildet und anschließend einer statistischen Auswertung unterzogen, da die Meßzyklen sehr streuen, es beispielsweise vorkommen kann, daß trotz Vorliegen eines defekten Katalysators ein einzelner Meßzyklus fälschlicherweise auf einen intakten Katalysator schliesen läßt. Durch die statistische Auswertung ist es weiter möglich zu erkennen, mit welchem Restwirkungsgrad der Katalysator noch arbeitet.

Das erfindungsgemäße Verfahren wird anhand des folgenden Ausführungsbeispiels noch näher erläutert.

Die Zeichnungsfigur zeigt schematisch den erfindungsgemäßen Verfahrensablauf.

Die Überprüfung kann nur stattfinden, wenn sich die Brennkraftmaschine in einem annähernd stationären Betriebszustand befindet. Die Kühlwassertemperatur muß sich oberhalb einer Mindestschwelle befinden, der Katalysator muß Betriebstemperatur haben und die Lambdaregelung muß aktiv sein.
Zu Beginn eines Prüfzeitraums (A) werden alle Zähler auf Null gestellt (Verfahrensschritt S1). Die Abfrage der Sondensignale der Lambdasonden vor und hinter dem Katalysator erfolgt zyklisch beispielsweise in einem vom verarbeitenden Rechner abgeleiteten Takt.

Im Verfahrensschritt S2 wird geprüft, ob das Signal der Sonde vor dem Katalysator ein mageres oder ein fettes Gemisch anzeigt. Bei fettem Gemisch wird zum Verfahrensschritt S3 verzweigt und der Zeitdauerzähler für die "Fettzeiten" der Sonde vor dem Katalysator (VFZ) um eins erhöht. Bei magerem Gemisch wird zum Verfahrensschritt S4 verzweigt und der Zeitdauerzähler für die "Magerzeiten" der Sonde vor dem Katalysator (VMZ) um eins erhöht.

In beiden Fällen geht es weiter mit dem Verfahrensschritt S5, bei dem das Signal der Sonde nach dem Katalysator geprüft wird. Zeigt es ein fettes Gemisch an, wird zum Verfahrensschritt S6 verzweigt und der "Fettzeitzähler" für die Sonde nach dem Katalysator (NFZ) um eins erhöht. Zeigt die Sonde aber ein mageres Gemisch an, wird zum Verfahrensschritt S7 verzweigt und der "Magerzeitzähler" für die Sonde nach dem Katalysator (NMZ) um eins erhöht.

In beiden Fällen geht es weiter mit dem Verfahrensschritt S8, bei dem der Zeitzähler ZZ des Prüfzeitraums um eins erhöht wird. Im Verfahrensschritt S9 wird geprüft, ob der Prüfzeitraum schon abgelaufen ist. Wenn nicht, wird nach B zurückgekehrt und es werden erneut die Sondensignale ausgewertet.

Wenn dagegen der Prüfzeitraum abgelaufen ist, werden die gemessenen Zeiten ausgewertet. Im Verfahrensschritt S10 wird das Verhältnis VF der bei der Lambdasonde vor dem Katalysator gemessenen Dauer der Fettzeit zur Dauer der Fettzeit, die die Sonde hinter dem Katalysator gemessen hat, angezeigt.
Im Verfahrensschritt S11 geschieht dasselbe für die Dauer der Magerzeiten, die vor und hinter dem Katalysator gemessen wurden (VM).

Aus beiden Verhältnissen wird im Verfahrensschritt S12 das Minimum errechnet (Vₘᵢₙ). Im Verfahrensschritt S13 wird dieses Minimum einer Mittelung (GVₘᵢₙ) unterzogen beispielsweise einer gleitenden Mittelung.

Ist der Betrag des so ermittelten Werts GVₘᵢₙ kleiner oder gleich einem vorgebbaren Grenzwert, so wird vom Verfahrensschritt S14 zum Verfahrensschritt S15 verzweigt und beispielsweise einer, hier nicht dargestellten Statistikauswerteschaltung, gemeldet, daß der Katalysator einen ausreichend großen Wirkungsgrad hat (KAT o.k.).

Wird der Grenzwert aber überschritten, so wird vom Verfahrensschritt S14 zum Verfahrensschritt S15 verzweigt und es erfolgt, eventuell unter Zwischenschaltung einer Statistikauswerteschaltung, die Meldung, daß der Katalysator keinen ausreichenden Wirkungsgrad mehr hat (KAT defekt).

Anschließend wird wieder zum Beginn des Verfahrens nach A zurückgegangen und bei Vorliegen der geforderten Randbedingungen eine erneute Überprüfung gestartet.

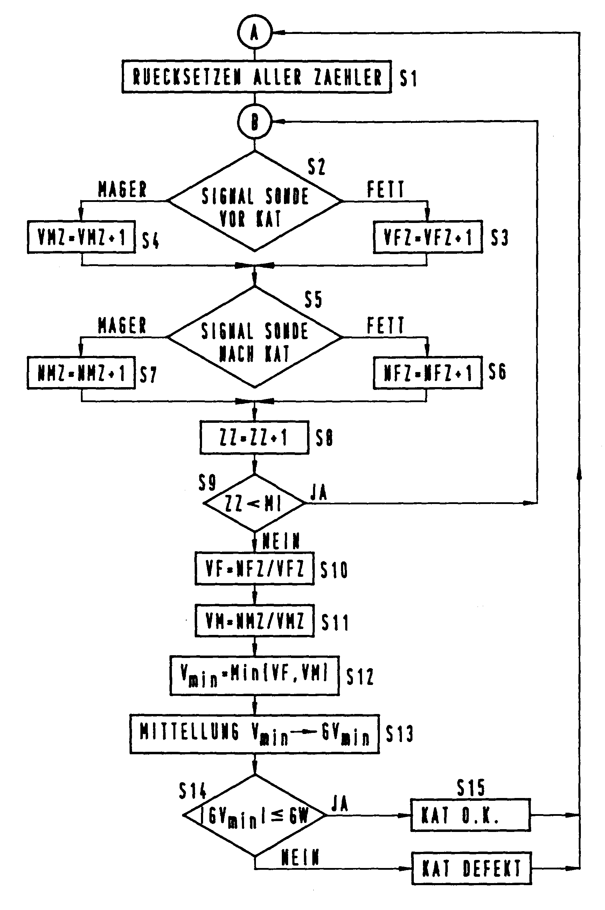

## Patentansprüche

1. Verfahren zum Überprüfen des Wirkungsgrades eines Katalysators mit je einer Sauerstoffsonde vor und hinter dem Katalysator
**dadurch gekennzeichnet**,
- daß während eines Prüfzeitraums die Verhältnisse der Zeiten gebildet werden während derer, einmal die Sauerstoffsonde hinter dem Katalysator und die Sauerstoffsonde vor dem Katalysator ein fettes Gemisch anzeigen (VF) und während derer zum anderen die Sauerstoffsonde hinter dem Katalysator und die Sauerstoffsonde vor dem Katalysator ein mageres Gemisch anzeigen (VM),
- von diesen beiden Verhältnissen (VF, VM) der betragsmäßig kleinere Wert (Vₘᵢₙ) genommen wird und der Wirkungsgrad des Katalysators als ausreichend angegeben wird, wenn der so ermittelte Wert (Vₘᵢₙ) kleiner als ein vorgebbarer Grenzwert (GW) ist.

2. Verfahren nach Anspruch 1,
**dadurch gekennzeichnet**,
daß die Katalysatorwirkungsgradüberprüfung nur durchgeführt wird, wenn sich die Brennkraftmaschine in einem annähernd stationären Betriebszustand befindet.

3. Verfahren nach Anspruch 1,
**dadurch gekennzeichnet**,
daß der kleinere Wert (Vₘᵢₙ) der Verhältnissse der Mager- und Fettzeiten vor dem Vergleich mit dem Grenzwert (GW) einer Mittelung unterzogen wird.

4. Verfahren nach Anspruch 1,
**dadurch gekennzeichnet,**
daß das Ergebnis der Katalysatorwirkungsgradüberprüfung einer statistischen Auswertung zugeführt wird.

5. Verfahren nach Anspruch 1,
**dadurch gekennzeichnet,**
daß der Grenzwert der Verhältniszeiten (GW) abhängig ist von Last und Drehzahl der Brennkraftmaschine.

## Claims

1. Method for checking the efficiency of a catalyst having an oxygen probe upstream and an oxygen probe downstream of the catalyst, characterized in that
- during a test period, the ratios of the times during which, on the one hand, the oxygen probe downstream of the catalyst and the oxygen probe upstream of the catalyst indicate a rich mixture (VF) and during which, on the other hand, the oxygen probe downstream of the catalyst and the oxygen probe upstream of the catalyst indicate a lean mixture (VM), are formed,
- the value of smaller amount (Vₘᵢₙ) of these two ratios (VF, VM) is taken and the efficiency of the catalyst is indicated as sufficient if the value (Vₘᵢₙ) thus determined is lower than a predeterminable limit value (GW).

2. Method according to Claim 1, characterized in that the catalyst efficiency check is conducted only when the internal combustion engine is in an approximately stationary operating state.

3. Method according to Claim 1, characterized in that the lower value (Vₘᵢₙ) of the ratios of the lean and rich times is subjected to averaging before the comparison with the limit value (GW).

4. Method according to Claim 1, characterized in that the result of the catalyst efficiency check is supplied for statistical evaluation.

5. Method according to Claim 1, characterized in that the limit value of the ratio times (GW) is dependent on the load and speed of the internal combustion engine.

## Revendications

1. Procédé de surveillance du rendement d'un catalyseur associé à des sondes à oxygène disposées respectivement en amont et en aval du catalyseur,
caractérisé en ce qu'au cours d'un intervalle de surveillance, on détermine les rapports des durées pendant lesquelles, d'une part, la sonde à oxygène en aval du catalyseur et la sonde à oxygène en amont du catalyseur indiquent un mélange riche (VF) et pendant lesquelles, d'autre part, la sonde à oxygène en aval du catalyseur et la sonde à oxygène en amont du catalyseur indiquent un mélange pauvre (VM),
- en ce que, à partir de ces deux rapports (VF, VM) on détermine la valeur (Vₘᵢₙ) la plus faible et en ce que le rendement du catalyseur est considérée comme suffisant lorsque la valeur (Vₘᵢₙ) ainsi déterminée est plus petite qu'une valeur limite (GW) préétablie.

2. Procédé selon la revendication 1, caractérisé en ce que la surveillance du rendement du catalyseur n'est exécutée que si le moteur à combustion interne se trouve en régime quasi stationnaire.

3. Procédé selon la revendication 1, caractérisé en ce que la valeur plus petite (Vₘᵢₙ) des rapports entre les durées pauvres et riches est soumise à l'établissement d'une moyenne avant d'être comparée à la valeur limite (GW).

4. Procédé selon la revendication 1, caractérisé en ce que le résultat de la surveillance du rendement du catalyseur est soumis à une évaluation statistique.

5. Procédé selon la revendication 1, caractérisé en ce que la valeur limite des durées (GW) est fonction de la charge et de la vitesse du moteur à combustion interne.
